Europäisches Patentamt

European Patent Office

Office européen des brevets

(19)

(11) Veröffentlichungsnummer: **0 528 383 B1**

(12) **EUROPÄISCHE PATENTSCHRIFT**

(45) Veröffentlichungstag der Patentschrift: **15.03.95**

(51) Int. Cl.⁶: **F16H 15/52**, B62M 11/12

(21) Anmeldenummer: **92113923.4**

(22) Anmeldetag: **14.08.92**

(54) **Antriebsnabe für ein Fahrzeug.**

(30) Priorität: **16.08.91 DE 4127043**

(43) Veröffentlichungstag der Anmeldung:
**24.02.93 Patentblatt 93/08**

(45) Bekanntmachung des Hinweises auf die
Patenterteilung:
**15.03.95 Patentblatt 95/11**

(84) Benannte Vertragsstaaten:
**AT DE FR GB NL SE**

(56) Entgegenhaltungen:
**EP-A- 0 432 742**
**WO-A-89/00256**
**DE-A- 424 994**
**US-A- 1 859 502**

**US-A 4 735 430**

(73) Patentinhaber: **Fichtel & Sachs AG**
**Postfach 12 40**
**D-97419 Schweinfurt (DE)**

(72) Erfinder: **Schievelbusch, Ulrich, Prof.**
**Dipl.-Ing.**
**Helleböhnweg 13**
**W-3500 Kassel (DE)**

(74) Vertreter: **Prechtel, Jörg, Dipl.-Phys. Dr. et al**
**Patentanwälte**
**H. Weickmann, Dr. K. Fincke**
**F.A. Weickmann, B. Huber**
**Dr. H. Liska, Dr. J. Prechtel, Dr. B.**
**Böhm**
**Postfach 86 08 20**
**D-81635 München (DE)**

## Beschreibung

Die Erfindung betrifft eine Antriebsnabe für ein Fahrzeug und insbesondere eine Antriebsnabe mit einem Reibradgetriebe, dessen Untersetzungsverhältnis stufenlos einstellbar ist.

Aus dem US-Patent 4 735 430 ist eine Antriebsnabe für ein Fahrrad bekannt, deren im Fahrradrahmen drehbar gelagerte Nabenhülse über ein in der Nabenhülse angeordnetes Reibradgetriebe mit einer von den Pedalen her rotierend angetriebenen Nabenachse angetrieben wird. Zwei auf der Achse angeordnete Toroidscheiben sind über mehrere Reibräder reibschlüssig miteinander gekuppelt. Die Reibräder sind an Achszapfen drehbar gelagert, die ihrerseits an einem stationären Reibradträger schwenkbar gelagert sind. Eine der beiden Toroidscheiben sitzt unverdrehbar, jedoch axial verschiebbar auf der Nabenachse und wird über eine mit Schrägschubflächen versehene Spreizkupplung gegen die Reibräder gepreßt, sobald die Nabenachse angetrieben wird. Die andere auf der Nabenachse drehbar angeordnete Toroidscheibe ist über ein Planetenradgetriebe mit ortsfesten Planetenradträgern und eine Freilaufkupplung mit der Nabenhülse gekuppelt. Zur stufenlosen Einstellung des Übersetzungsverhältnisses des Reibradgetriebes sind die Achszapfen der Reibräder radial nach außen verlängert und greifen in Schrägschubschlitze einer innerhalb der Nabenhülse drehbar angebrachten, das Reibradgetriebe umschließenden Steuerhülse. Durch Verdrehen der Steuerhülse mittels einer Zugseilanordnung kann die Winkellage der Reibräder relativ zur Nabenachse und damit das Übersetzungsverhältnis des Reibradgetriebes geändert werden.

Bei der bekannten Antriebsnabe ist die Nabenhülse über die Steuerhülse an einem Gehäuse des Reibradgetriebes radial geführt. Die Radlast erschwert hierbei das Einstellen des Übersetzungsverhältnisses. Da bei der bekannten Antriebsnabe beide Toroidscheiben beweglich geführt sein müssen, ergeben sich nicht nur Fertigungsprobleme, sondern es wird auch die Betriebssicherheit und die Lebensdauer unerwünscht beeinflußt. Schließlich erfordert die bekannte Antriebsnabe spezielle Montagemittel, da die Nabenachse anders als bei herkömmlichen Antriebsnaben drehbar im Fahrradrahmen gelagert sein muß. Die Steuerung über die zwischengeschaltete Steuerhülse ist eine aufwendige Sonderkonstruktion. Das Planetengetriebe ist zwingend erforderlich, um die Nabenhülse in der Drehrichtung des Antreibers anzutreiben; es verschlechtert jedoch den Wirkungsgrad der Antriebsnabe und erhöht den Bauaufwand sowie das Nabengewicht.

Eine Verbesserung dieser Nabe zeigt die EP 0 432 742 A1, aus der die Merkmale gemäß Oberbegriff von Anspruch 1 bekannt sind. Die Nabenachse ist, wie bei Fahrrädern üblich, starr in den Fahrradrahmen einbaubar mit durch die hohle Nabenachse verlaufendem Gestänge zur Reibradgetriebesteuerung. Der Antreiber ist drehfest mit dem Reibradträger verbunden und treibt eine zweite Toroidscheibe dadurch, ins Schnelle übersetzt, an, daß die Reibräder an der mit der Nabenachse drehfest verbundenen ersten Toroidscheibe abrollen. Die zur Achsmitte weisenden und in Achsebene schwenkbaren Achszapfen sind an ihrem inneren Ende kugelförmig ausgebildet und im Außenring eines Kugellagers geführt, welcher von dem durch die hohle Nabenachse verlaufenden Gestänge über einen Schubklotz axial hin und her bewegbar ist. Die mit höherer Drehzahl laufende zweite Toroidscheibe wird von einem nachgeschalteten Planetengetriebe auf niedrige Drehzahlen rückübersetzt.

Der Erfindung liegt die Aufgabe zugrunde, eine Fahrzeugantriebsnabe anzugeben, deren Übersetzungsverhältnis stufenlos einstellbar ist. Die Antriebsnabe soll von einfacher und kostengünstig herzustellender Konstruktion sein. Ferner soll der Wirkungsgrad hoch sein.

Die Erfindung geht von einer Antriebsnabe für ein Fahrzeug aus, umfassend
eine Nabenachse, die eine Achse der Nabe festlegt,
eine die Nabenachse gleichachsig und relativ dazu drehbar umschließende Nabenhülse,
einen relativ zur Nabenhülse drehbar gelagerten Antreiber, ein innerhalb der Nabenhülse angeordnetes Reibradgetriebe, welches zwei sich axial gegenüberliegende Toroidscheiben und mehrere in Umfangsrichtung der Toroidscheiben verteilte, die Toroidscheiben reibschlüssig miteinander verbindende Reibräder aufweist und im Kraftweg zwischen Antreiber und Nabenhülse angeordnet ist,
wobei die Reibräder an Achszapfen drehbar gelagert sind und die Achszapfen ihrerseits über in Umfangsrichtung der Toroidscheiben verlaufende Schwenkachsen schwenkbar an einem Reibradträger gelagert sind,
wenigstens eine bei vom Antreiber her erfolgendem Antrieb der Nabe den Kraftweg zwischen Antreiber und Nabenhülse schließende, bei nicht antreibendem Antreiber den Kraftweg öffnende Kupplungseinrichtung,
eine von außen betätigbare, die Reibräder zur stufenlosen Einstellung des Übersetzungsverhältnisses des Reibradgetriebes gemeinsam um die Schwenkachsen schwenkende Steuereinrichtung,
wobei eine erste der beiden Toroidscheiben, die vom Antreiber weiter entfernt ist als die zweite der beiden Toroidscheiben, drehfest auf der Nabenachse angeordnet ist.

Die erfindungsgemäße Verbesserung besteht darin, daß die zweite Toroidscheibe mit dem Antreiber zumindest in Antriebsdrehrichtung drehfest gekuppelt ist, und daß der Reibradträger mit der Nabenhülse zumindest in Antriebsdrehrichtung drehfest gekuppelt ist. Der Kraftfluß vom Antreiber aus erfolgt erfindungsgemäß also über die mit dem Antreiber drehfest gekuppelte Toroidscheibe, die ihrerseits die an der gegenüberliegenden ortsfesten Toroidscheibe abrollenden Reibräder antreibt und mit diesen den Reibradträger. Der Reibradträger wiederum ist mittels der Nabenhülse drehfest gekuppelt. Ein Planetengetriebe zur Drehrichtungsumkehr ist bei dieser Anordnung nicht erforderlich. Auch wird kein Planetengetriebe benötigt, um das langsamere Drehen der Nabenhülse im Vergleich zum Antreiber auszugleichen, da es im allgemeinen ausreicht, ein Zahnrad des Antreibers mit reduzierter Zahnzahl einzusetzen. Der Wirkungsgrad ist durch den Wegfall des Planetengetriebes deutlich erhöht, was für Fahrradantriebsnaben von besonderer Bedeutung ist, da diese in Konkurrenz mit den besonders guten Wirkungsgrad aufweisenden Kettenschaltungen stehen. Der Wegfall des Planetengetriebes führt zudem zu kostengünstigerem Aufbau und zu reduziertem Gewicht. Die manuelle oder ggf. auch über einen entsprechenden elektrischen Stellantrieb erfolgende Verstellung des Übersetzungsverhältnisses des Reibradgetriebes kann entsprechend der EP-0 432 742 A1 über ein durch die hohle Nabenachse geführtes Gestänge erfolgen.

Bei Verwendung üblicher Kettenradübersetzungen kann es selbst bei Einsatz eines kleinen Naben-Antriebszahnrads von Vorteil sein, die maximale Drehgeschwindigkeit der Nabenhülse bei vorgegebener Drehgeschwindigkeit des Antreibers noch weiter zu erhöhen. Hierzu wird vorgeschlagen, daß die Toroidfläche der ersten Toroidscheibe weiter in Richtung zur Achse hin reicht als die Toroidfläche der zweiten Toroidscheibe, und daß die Toroidfläche der zweiten Toroidscheibe weiter in Richtung weg von der Achse reicht als die Toroidfläche der ersten Toroidscheibe. Da die erste Toroidscheibe fest mit der Nabenachse verbunden ist, bereitet die Verlängerung der Toroidlaufbahn auf der ersten Toroidscheibe nach innen zur Achse hin keine Schwierigkeiten. Durch die angegebenen Maßnahmen wird der Übersetzungsbereich des Reibradgetriebes zu der ins Schnelle übersetzenden Seite hin ausgeweitet. Da die Toroidfläche der ersten Toroidscheibe nicht soweit in Richtung weg von der Achse reichen muß, kann ohne weiteres ein Ringraum zwischen dem Außenumfang der ersten Toroidscheibe und dem Innenumfang der Nabenhülse vorgesehen werden.

Dieser Ringraum kann eine Kupplungsbuchse aufnehmen, die den Reibradträger mit der Nabenhülse über eine Kupplung verbindet, wobei diese Kupplung bevorzugt eine Spreizkupplung ist. Die Kupplungsbuchse stellt also eine drehfeste Verbindung zwischen dem Reibradträger und der Nabenhülse dar, wobei die in den Kraftfluß eingebaute Spreizkupplung in einem Bereich mit ausreichendem Einbauraum angeordnet sein kann, nämlich zwischen der Innenseite einer Nabenstirnwand und der ersten Toroidscheibe. Die Spreizkupplung dient dazu, die beiden Toroidscheiben mit zunehmnder Kraft gegen die Reibräder zu drücken, sobald das zwischen Antreiber und Hülse wirkende Antriebsmoment steigt. Auf diese Weise wird zum einen bei geringem Antriebsmoment ein besonders leichtgängiger Lauf der Nabe sichergestellt und zum anderen bei hohem Antriebsmoment ein Durchdrehen der Reibräder vermieden.

In einer besonders vorteilhaften Ausführungsform der Erfindung ist die Nabenhülse zur Aufnahme der inneren axialen Kräfte des Reibradgetriebes ausgebildet. Dementsprechend ist die Nabenachse von axialen Kräften entlastet und kann somit mechanisch weniger stabil und damit kostengünstiger und leichter gebaut sein. Die Nabenhülse selbst kann aufgrund ihrer relativ großen Materialquerschnittsfläche ohne weiteres auch die bei dem erfindungsgemäßen Reibradgetriebe verhältnismäßig großen maximalen axialen Kräfte aufnehmen.

Besonders bevorzugt ist vorgesehen,
daß die Nabenhülse an ihren beiden axialen Enden jeweils mit einer Nabenstirnwand versehen ist,
daß sich die Spreizkupplung in zur Achse der Nabe paralleler Richtung einerseits an der ersten Toroidscheibe und andererseits an der Innenseite einer der beiden Nabenstirnwände abstützt,
daß an der anderen Nabenstirnwand ein Drehlager vorgesehen ist, welches sich in zur Achse der Nabe paralleler Richtung einerseits an der zweiten Toroidscheibe und andererseits an der Innenseite der anderen Nabenstirnwand abstützt, und
daß wenigstens eine der beiden Toroidscheiben an der Nabe in zur Achse der Nabe paralleler Richtung beweglich gelagert ist. Die Nabenhülse umfaßt somit das Reibradgetriebe gehäuseartig. Um in diesem Falle kostengünstige Herstellbarkeit sowie vereinfachte Montage sowie Demontage sicherzustellen, wird vorgeschlagen, daß die Nabenhülse aus wenigstens zwei miteinander verschraubbaren Teilen besteht.

Die beiden Toroidscheiben sind relativ zueinander axial bewegbar, um die gewünschte Erhöhung bzw. Erniedrigung der jeweiligen Andruckkraft auf die Reibräder zu ermöglichen. Bevorzugt ist hierzu vorgesehen,
daß die erste Toroidscheibe auf der Nabenachse fest angeordnet ist,
daß die zweite Toroidscheibe auf der Nabenachse beweglich angeordnet ist, und

daß die Nabenhülse an der Nabenachse in zur Achse der Nabe paralleler Richtung beweglich gelagert ist. Dies ergibt einfachen, mechanisch robusten Aufbau mit der Möglichkeit der Aufnahme der inneren axialen Kräfte durch die Nabenhülse. Die Nabenhülse stellt sich in ihre Axiallage selbsttätig entsprechend den herrschenden Kräften ein. Erhöht sich beispielsweise das Antriebsmoment, so bewegt die Spreizkupplung die eine Nabenstirnwand weg von der ersten Toroidscheibe mit der Folge, daß die andere Nabenstirnwand zunehmend an die beweglich gelagerte zweite Toroidscheibe andrückt und diese somit in Richtung auf die erste Toriodscheibe hindrückt. Neben den von den Laufrädern herrührenden inneren axialen Kräften werden auch die von der Steuereinrichtung her rührenden Kräfte von der Nabenhülse aufgenommen, und zwar über die Reibräder, den Reibradträger und die Kupplungsbuchse.

Besonders bevorzugt sind die an den beiden Nabenstirnwänden angeordneten Drehlager als Schrägkugellager ausgebildet. Diese Art der Axialkraftabstützung hat den Vorteil, daß die Nabenhülse auf der Nabenachse nur noch radial abgestützt werden muß. Elastische Verformungen, die wegen der großen Kräfte in axialer Richtung unvermeidlich sind, können bei dieser Anordnung zu keinerlei Verzwängungen an irgendeiner Stelle führen. Damit die Radialkugellager zwischen den Nabenstirnwänden und der Nabenachse Bewegungsspiel in Richtung parallel zur Achse der Nabe bei geringem konstruktivem Aufwand haben, wird vorgeschlagen, daß die Radialkugellager mit einer Kugellaufbahn mit großem Schmiegeradius oder mit einer zylindrischen Kugellaufbahn ausgebildet sind. Die Nabenhülse muß auf der Nabenachse also nur noch radial abgestützt werden. Über die Spreizkupplung sowie das dortige Schrägkugellager werden Axialkräfte in der einen Richtung von der Hülse auf die feststehende erste Toroidscheibe übertragen; Axialkräfte in der anderen Richtung werden über das Schrägkugellager am anderen Hülsenende, über die zweite Toroidscheibe sowie über die Reibräder auf die achsfeste erste Toroidscheibe geleitet. Diese Bauart sorgt nicht nur für den Ausgleich elastischer Verformungen, sondern auch für den Ausgleich von Toleranzungenauigkeiten.

Um ein ständiges Mitdrehen der Fahrradpedale auch bei antriebslosem Nabenbetrieb zu ermöglichen bei zuverlässiger Funktion und einfacher Herstellbarkeit, wird vorgeschlagen, daß die zweite Toroidscheibe über eine Freilaufkupplung, vorzugsweise Klinkenfreilaufkupplung, mit dem Antreiber in Antriebsdrehrichtung drehfest verbunden ist.

Um eine Anfangsvorspannung der beiden Toriodscheiben in Richtung aufeinanderzu sicherzustellen, wird der Einsatz wenigstens einer Vorspannfeder vorgeschlagen, die sich einerseits an der Nabenhülse und andererseits an einer der beiden Toroidscheiben abstützt. Diese Vorspannfeder kann als Druckfeder ausgebildet sein, die einerseits an die Innenseite der zweiten Nabenstirnwand angreift und die sich andererseits an einem Außenring des zwischen die zweite Nabenstirnwand und die zweite Toroidscheibe eingesetzten Schrägkugellagers abstützt.

Ferner ist es von Vorteil, die Rückstellmomente, die besonders bei der Berggangübersetzung an der ersten Toroidscheibe auftreten, durch einen Reaktionsmoment-Hebel auf die gleiche Weise abzustützen, wie bei Rücktrittbremsnaben, bei denen allerdings die Bremsmomente abgeleitet werden. Es sind also zum Unterschied hierzu bei der erfindungsgemäßen Nabe Reaktionsmomente abzuleiten, die die Differenz zwischen Antriebsmoment und Abtriebsmoment sind.

Um eine kostengünstig herstellbare und dabei mechanisch hoch belastbare Lagerung der Reibräder zu erhalten, wird vorgeschlagen, daß die Reibräder in Schwenkrahmen gelagert sind, die ihrerseits wieder im Reibradträger mittels Lagerbolzen um eine jeweilige Schwenkachse drehbar gelagert sind.

Die Steuereinrichtung umfaßt bevorzugt ein innerhalb der Nabenachse geführtes Gestänge und ein gelenkig mit den Achszapfen der Reibräder gekuppeltes, auf der Nabenachse geführtes und längs der Nabenachse mittels des Gestänges verschiebbares Schaltelement. Das Schaltelement wiederum umfaßt bevorzugt einen Lageraußenring, einen Lagerinnenring sowie ein den Lageraußenring mit dem Lagerinnenring verbindendes Kugellager.

Um die Verstellkräfte bei der Verstellung des Übersetzungsverhältnisses des Reibradgetriebes gering zu halten, wird vorgeschlagen, daß die Schwenkrahmen mit Hebeln versehen sind, die an den Lageraußenring jeweils in einem Angriffspunkt angreifen, dessen Abstand von der Schwenkachse der der Schwenkrahmen im wesentlichen dem Abstand zwischen der Achse der Nabe und der Schwenkachse der Schwenkrahmen entspricht.

Im folgenden wird ein Ausführungsbeispiel der Erfindung an Hand von Zeichnungen näher erläutert. Hierbei zeigen:

| | |
|---|---|
| Fig. 1 | einen Axiallängsschnitt durch die Antriebsnabe; |
| Fig. 2 | einen vergrößerten Teilausschnitt aus dem Axiallängsschnitt der Fig. 1; |
| Fig. 3 | eine teilweise geschnittene Ansicht eines Schwenkrahmens mit Reibrad und Steuerhebel; |
| Fig. 4 | einen Axialquerschnitt durch die Antriebsnabe im Zentrum des Reibradgetriebes entlang der Linie IV-IV in der Fig. 1. |

Die in den Figuren dargestellte Antriebsnabe umfaßt eine drehfest am Rahmen des Fahrzeugs zu befestigende Nabenachse 1, an der in nachstehend noch näher erläuterter Weise über Kugellager 3 und 5 eine mit Speichenflanschen 7 versehene Nabenhülse 9 drehbar gelagert ist. Die Längsachse der Nabenachse 1 bildet die zentrale Achse 100 der Antriebsnabe.

Axial seitlich neben der Nabenhülse 9 ist auf der Nabenachse 1 ein mit einem Kettenzahnrad 11 versehener Antreiber 13 auf Nadellagern 15 drehbar gelagert.

Innerhalb der Nabenhülse 9 ist ein Reibradgetriebe 17 angeordnet, das über eine Klinkenfreilaufkupplung 23 mit dem Antreiber 13 und über Kugeln 19 einer Spreizkupplung 20 direkt mit der Nabenhülse 9 gekuppelt ist. Die Kugeln 19 ragen in mit Steigflächen ausgebildete Vertiefungen sowohl eines Kupplungsringes 33 als auch eines Hülsenringes (Nabenstirnwand) 56 hinein. Das Drehmoment des Antreibers 13 wird über die Klinkenfreilaufkupplung 23, das Reibradgetriebe 17 und die Spreizkupplung 20 direkt auf die Nabenhülse 9 übertragen. Steht während der Fahrt der Antreiber 13 still, so läuft das Reibradgetriebe 17 mit, da es über die Kugeln 19 der Spreizkupplung 20 von der Hülse 9 angetrieben wird, während der Kraftfluß durch die Klinkenfreilaufkupplung 23 unterbrochen ist.

Das Übersetzungsverhältnis des Reibradgetriebes 17 ist stufenlos einstellbar. Im Reibradgetriebe 17 sind zwei Toroidscheiben 25 und 27 mit axialem Abstand voneinander angeordnet, wobei eine erste Toroidscheibe 25 fest auf der Nabenachse 1 gehalten ist und an einem Ansatz 29 zugleich das Lager 3 der Nabenhülse 9 trägt. Die zweite Toroidscheibe 27 ist drehbar über ein Schrägkugellager 31 mit einem Druckring 33a in einem mit der Nabenhülse 9 verschraubten Schraubdeckel (Nabenstirnwand) 57 verbunden, der wiederum auf dem Antreiber 13 mittels des Kugellagers 5 gelagert ist. Zwischen den beiden Toroidscheiben 25 und 27 sind drei um 120° gegeneinander winkelversetzte Reibräder 35 angeordnet, die die Toroidscheiben 25 und 27 in Reibschluß zueinander bringen. Jedes der Reibräder 35 ist an einem Achszapfen 37 drehbar gelagert, dessen Drehachse 102 die Längsachse (Achse 100) der Nabenachse 1 schneidet. Wie am besten Fig. 4 zeigt, sind die Achszapfen 37 in Schwenkrahmen 39 gelagert, die ihrerseits um Schwenkachsen 41 schwenkbar an einem gemeinsamen, drehbar an der Nabenachse 1 gelagerten Reibradträger 43 gelagert sind. Die Schwenkachsen 41 liegen in einer gemeinsamen senkrecht zur Nabenachse 1 verlaufenden Ebene, haben gleichen Abstand von der Nabenachse 1 und erstrecken sich in tangentialer Richtung relativ zu dieser.

Der Schwenkrahmen 39 besteht aus zwei Platten 39a und 39b, von denen die eine 39a einen angebogenen Hebel 39c mit einer Bohrung 45a trägt. Diese greift in Kugelköpfe 45 an einem Kupplungsring 47 ein, wodurch der Schwenkrahmen 39 gelenkig gelagert ist. Der Kupplungsring (Lageraußenring) 47 ist über ein Kugellager 49 mit einem auf der Nabenachse 1 axial verschiebbar geführten Lagerinnenring 51 verbunden und überträgt die Steuerbewegung eines zentrisch in der Nabenachse 1 verschiebbar geführten Steuergestänges 53 auf den Kupplungsring 47. Das Steuergestänge 53 ist über nicht dargestellte, manuell oder elektromechanisch zu betätigende Stellorgane verschiebbar und trägt einen Schubklotz 55, der durch Schlitze 58 der Nabenachse 1 hindurch mit dem Lagerinnenring 51 verbunden ist. Durch axiales Verschieben des Gestänges 53 werden die Reibräder 35 gemeinsam um ihre Schwenkachsen 41 geschwenkt, womit das Verhältnis des jeweils eingestellten effektiven Laufbahndurchmessers d1 der Toroidscheibe 25 zum effektiven Laufbahndurchmesser $d_2$ der Toroidscheibe 27 stufenlos verstellt werden kann. Da das Reibradgetriebe 17 vom Antreiber 13 her über die zweite Toroidscheibe 27 angetrieben wird, läuft der Reibradträger 43 stets mit kleinerer Drehzahl um. Das Verhältnis der Drehzahlen $n_2$ des Reibradträgers 43 zur Drehzahl $n_1$ der Toroidscheibe 27 ergibt sich zu $n_2/n_1 = 1/(1 + d_2/d_1)$.

Mit Hilfe der Spreizkupplung 20 wird mit wachsendem Drehmoment am Antreiber 13 die axiale Anpreßkraft zwischen den Toroidscheiben 25 und 27 annähernd proportional gesteigert. Die Spreizkupplung 20 stützt sich mit dem Kupplungsring 33 über Kugeln 34 an der achsfesten ersten Toroidscheibe 25 ab und drückt den Hülsenring 56, der mit der Nabenhülse 9 fest verbunden ist, nach links außen, wodurch der mit der Nabenhülse 9 verbundene Schraubdeckel 57 die zweite Toroidscheibe 27 über den Druckring 33a und die Kugeln 31 gegen die Reibräder 35 preßt. Für einen vorbestimmten Anfangsdruck sorgt eine Druckfeder 65 zwischen dem Druckring 33a und dem Schraubdeckel 57, der seinerseits durch seine Verschraubung in der Nabenhülse 9 eine spielfreie Voreinstellung erlaubt. Der Druckring 33a ist axial verschiebbar im Schraubdeckel 57 gelagert. Die Druckfeder 65 ist, wie hier gezeigt, bevorzugt eine Tellerfeder; andere Federarten sind aber ebenfalls verwendbar.

Der Kupplungsring 33 der Spreizkupplung 20 steht über eine Kupplungshülse 43a mit dem Reibradträger 43 in Drehverbindung, wobei der Zentrierung desselben über die Reibräder 35 durch einen axialen Schiebesitz zwischen Kupplungshülse 43a und Kupplungsring 33 Rechnung getragen wird.

Das Übersetzungsverhältnis der Antriebsnabe hat ohne ein nachgeschaltetes Getriebe Berggang-Charakter. Um aber den Gesamtbereich aller Übersetzungen so einzurichten, daß gegenüber dem üblichen Nabeneinbau keine zusätzlichen Aufwendungen entstehen, ist es erforderlich, bereits bei der Einleitung der Drehbewegung am Kettenrad durch die Wahl eines möglichst kleinen Kettenrad-Durchmessers und somit durch eine vorgelegte größere Übersetzung ins Schnelle, die systembedingte Übersetzung der Antriebsnabe ins Langsame zu kompensieren. Auch kann, falls erforderlich, ein größeres vorderes Tretkurbel-Kettenrad eingesetzt werden. Falls diese Maßnahmen allein nicht genügen, wird die restliche Kompensation vom Reibradgetriebe selbst durch die Asymmetrie seiner Abrollbereiche in den Toroidlaufbahnen erbracht.

Während die achsfeste Toroidscheibe 25 mit ihrer Toroidlaufbahn 25a bis nahe an die Achse heranreicht und somit die Reibräder 35 auch bis dahin abrollen läßt, liegen die Verhältnisse an der beweglichen Toroidscheibe 27 anders: Hier wird der von den Reibrädern bestrichene Bereich dementsprechend mehr nach radial außen verlagert (Toroidlaufbahn 27a). Der am Außendurchmesser der achsfesten ersten Toroidscheibe 25 von den Reibrädern 35 nicht bestrichene Ringraum 104 steht zur Unterbringung des Reibradträgers 43 und der Kupplungshülse 43a zur Verfügung.

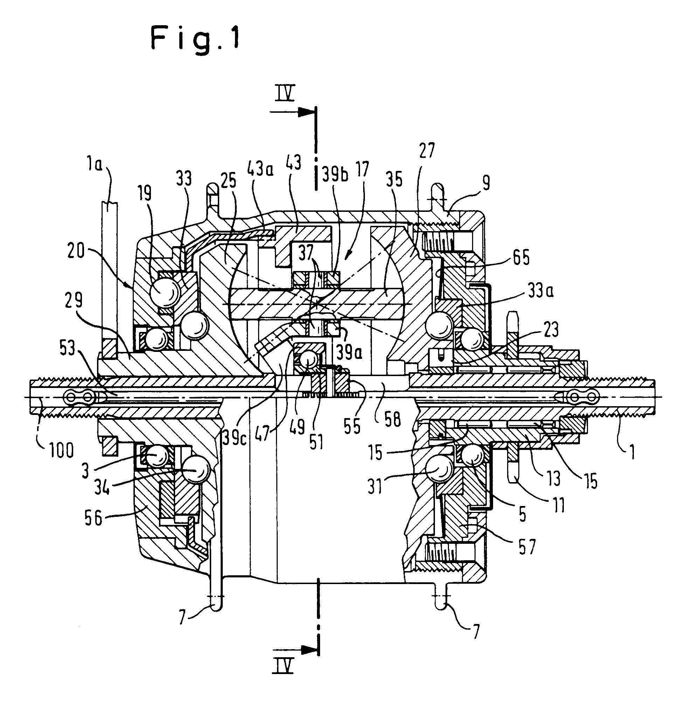

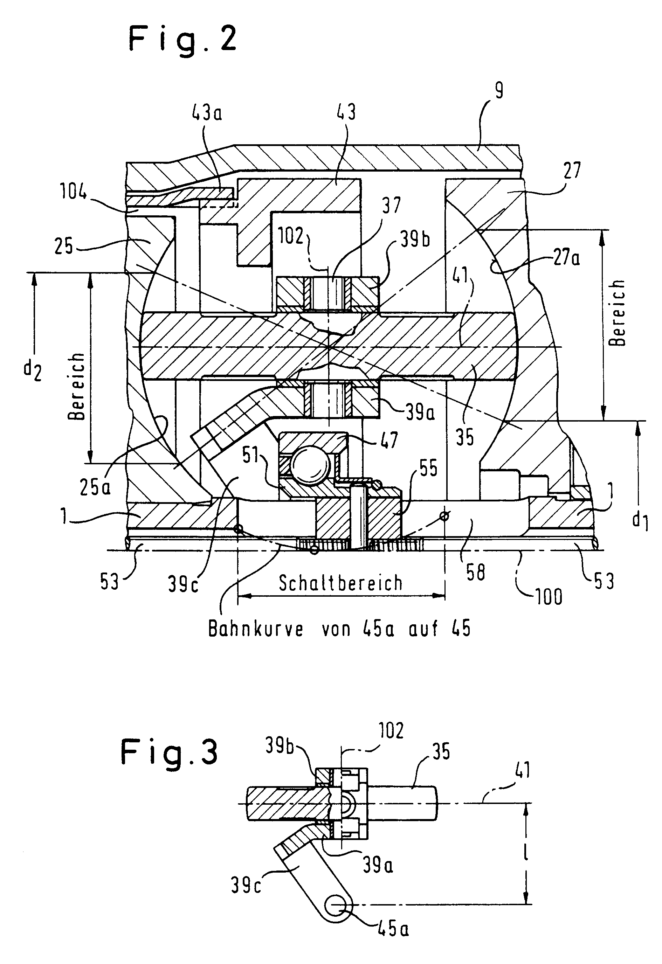

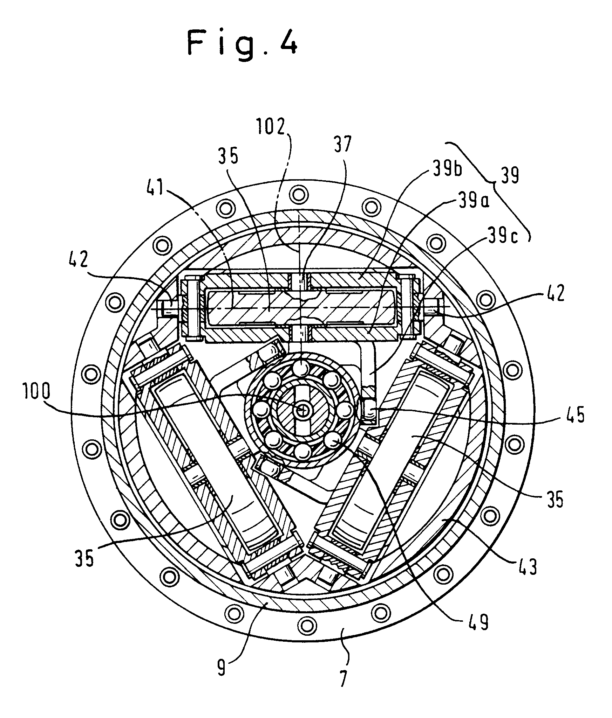

Fig. 2 zeigt den Bereich der von den Reibrädern 35 bestrichenen Toroidflächen, wobei die Mittellinien der Reibräder 35, die die extremen Schwenkstellungen bezeichnen, erkennen lassen, daß so der Übersetzungsbereich ins Schnelle verschoben wird. Es sind also die Maßnahmen zur Drehzahlerhöhung in vorteilhafter Weise mit den Maßnahmen zur kompakten Bauweise verbindbar.

Schließlich ist bei der vorgeschlagenen Bauweise die Unterbringung optimal langer Hebel 39c möglich, die den Kraftaufwand der Verstellung gering halten. Da die Hebel 39c gemäß Fig. 2 und Fig. 4 seitlich neben der Achse 100 an den Kupplungsring 42 angreifen, und zwar in gleicher Höhe wie die Achse 100 (s. Fig. 4), entspricht die wirksame Hebellänge 1 der Hebel 39c dem Abstand zwischen der Achse 100 und der jeweiligen Schwenkachse 41. Durch axiale Verschiebungen des Kugellagers 49 über den Schubklotz 55 verschieben sich die Kugelköpfe 45 unter Beschreibung einer Raumkurve, hervorgerufen durch die Kreisbewegung der Bohrung 45a in den Hebeln 39c, mit entsprechender Verdrehung des Kupplungsrings 47 gegenüber dem Lagerinnenring 51. Auf diese Weise werden die Schwenkrahmen 39 mit ihren Reibrädern 35 verschwenkt und so das Übersetzungsverhältnis des Reibradgetriebes geändert.

Wichtige Gesichtspunkte der vorstehend beschriebenen Erfindung werden im folgenden wiedergegeben:

Die Antriebsnabe für ein Fahrzeug, insbesondere ein Fahrrad, umfaßt eine Nabenachse 1, eine relativ zur Nabenachse 1 drehbare Nabenhülse 9 und einen drehbar auf der Nabenachse 1 gelagerten Antreiber 13. Der Antreiber 13 treibt die Nabenhülse 9 über ein Reibradgetriebe 17, dessen erste Toroidscheibe 25 drehfest mit der Nabenachse 1 verbunden ist, dessen zweite Toroidscheibe 27 mit dem Antreiber 13 über eine Klinkenfreilaufkupplung 23 verbunden ist und den mit mehreren Reibrädern 35 versehenen Reibradträger 43 antreibt, der im Kraftschluß mit der Nabenhülse 9 über eine Spreizkupplung 20 verbunden ist. Das stufenlos einstellbare Übersetzungsverhältnis des Reibradgetriebes 17 wird vom Inneren der Nabenachse 1 her über ein Gestänge 53 gesteuert, welches über einen Kupplungsring 47 die schwenkbar gelagerten Hebel 39c der Schwenkrahmen der Reibräder 35 mitnimmt. Die systemeigene Übersetzung des Reibradgetriebes 17 vom Antreiber 13 zum Reibradträger 43 ins Langsame kann durch drehzahlerhöhende Maßnahmen sowohl am Kettentrieb als auch innerhalb des Reibradgetriebes 17 durch asymmetrische Anordnung der Toroidbereiche kompensiert werden.

## Patentansprüche

1. Antriebsnabe für ein Fahrzeug, insbesondere Fahrrad, umfassend
   - eine Nabenachse (1), die eine Achse (100) der Nabe festlegt,
   - eine die Nabenachse (1) gleichachsig und relativ dazu drehbar umschließende Nabenhülse (9),
   - einen relativ zur Nabenhülse (9) und zur Nabenachse (1) drehbar gelagerten Antreiber (13),
   - ein innerhalb der Nabenhülse (9) angeordnetes Reibradgetriebe (17), welches zwei sich axial gegenüberliegende Toroidscheiben (25,27) und mehrere in Umfangsrichtung der Toroidscheiben (26,27) verteilte, die Toroidscheiben (26,27) reibschlüssig miteinander verbindende Reibräder (35) aufweist und im Kraftweg zwischen Antreiber (13) und Nabenhülse (9) angeordnet ist, wobei die Reibräder (35) an Achszapfen (37) drehbar gelagert sind und die Achszapfen (37) ihrerseits über in Umfangsrichtung der Toroidscheiben (25,27) verlaufende Schwenkachsen (41) schwenkbar an einem Reibradträger (43) gelagert sind,

- wenigstens eine bei vom Antreiber (13) her erfolgendem Antrieb der Nabe den Kraftweg zwischen Antreiber (13) und Nabenhülse (9) schließende, bei nicht antreibendem Antreiber (13) den Kraftweg öffnende Kupplungseinrichtung (23),
- eine von außen betätigbare, die Reibräder (35) zur stufenlosen Einstellung des Übersetzungsverhältnisses des Reibradgetriebes (17) gemeinsam um die Schwenkachsen (41) schwenkende Steuereinrichtung (47,51,53),

wobei eine erste (25) der beiden Toroidscheiben (25,27), die vom Antreiber (13) weiter entfernt ist als die zweite (27) der beiden Toroidscheiben, drehfest auf der Nabenachse (1) angeordnet ist,

**dadurch gekennzeichnet,**

daß die zweite Toroidscheibe (27) mit dem Antreiber (13) zumindest in Antriebsdrehrichtung drehfest gekuppelt ist, und

daß der Reibradträger (43) mit der Nabenhülse (9) zumindest in Antriebsdrehrichtung drehfest gekuppelt ist.

2. Antriebsnabe nach Anspruch 1,
**dadurch gekennzeichnet**, daß die Toroidfläche (25a) der ersten Toroidscheibe (25) weiter in Richtung zur Achse (100) hin reicht als die Toroidfläche (27a) der zweiten Toroidscheibe (27), und daß die Toroidfläche (27a) der zweiten Toroidscheibe (27) weiter in Richtung weg von der Achse (100) reicht als die Toroidfläche (25a) der ersten Toroidscheibe (25).

3. Antriebsnabe nach Anspruch 1 oder 2,
**gekennzeichnet durch** eine Kupplungshülse (43a), die sich in einem Ringraum (104) zwischen der ersten Toroidscheibe (25) und der Nabenhülse (9) erstreckt, und die den Reibradträger (43) mit der Nabenhülse (9) über eine Kupplung verbindet.

4. Antriebsnabe nach Anspruch 3,
**dadurch gekennzeichnet,** daß die Kupplung eine Spreizkupplung (20) ist.

5. Antriebsnabe nach einem der vorhergehenden Ansprüche,
**dadurch gekennzeichnet,** daß die Nabenhülse (9) zur Aufnahme der inneren axialen Kräfte des Reibradgetriebes (17) ausgebildet ist.

6. Antriebsnabe nach Anspruch 5,
**dadurch gekennzeichnet,**
- daß die Habenhülse (9) an ihren beiden axialen Enden jeweils mit einer Nabenstirnwand (56,57) versehen ist,
- daß sich die Spreizkupplung (20) in zur Achse (100) der Nabe paralleler Richtung einerseits an der ersten Toroidscheibe (25) und andererseits an der Innenseite einer (56) der beiden Nabenstirnwände (56,57) abstützt,
- daß an der anderen Nabenstirnwand (57) ein Drehlager vorgesehen ist, welches sich in zur Achse (100) der Nabe paralleler Richtung einerseits an der zweiten Toroidscheibe (27) und andererseits an der Innenseite der anderen Nabenstirnwand (57) abstützt, und
- daß wenigstens eine (27) der beiden Toroidscheiben (25,27) an der Nabe in zur Achse (100) der Nabe paralleler Richtung beweglich gelagert ist.

7. Antriebsnabe nach Anspruch 6,
**dadurch gekennzeichnet,**
- daß die erste Toroidscheibe (25) auf der Nabenachse (1) fest angeordnet ist,
- daß die zweite Toroidscheibe (27) auf der Nabenachse (1) beweglich angeordnet ist, und
- daß die Nabenhülse (9) an der Nabenachse (1) in zur Achse (100) der Nabe paralleler Richtung beweglich gelagert ist.

8. Antriebsnabe nach Anspruch 6 oder 7,
**dadurch gekennzeichnet,** daß das Drehlager ein Schrägkugellager (31) ist.

9. Antriebsnabe nach einem der Ansprüche 6 bis 8,
**dadurch gekennzeichnet,** daß wenigstens eine der beiden Nabenstirnwände (56,57) sich über ein Radial-Kugellager (3,5) mit Bewegungsspiel in Richtung parallel zur Achse (100) der Nabe abstützt.

10. Antriebsnabe nach Anspruch 9,
**dadurch gekennzeichnet,** daß das Radialkugellager (3,5) mit einer Kugellaufbahn mit großem Schmiegeradius oder mit einer zylindrischen Kugellaufbahn ausgebildet ist.

11. Antriebsnabe nach einem der Ansprüche 4 bis 10,
**dadurch gekennzeichnet,** daß die Kupplungshülse (43a) mit einem Kupplungsring (33) versehen ist, der sich einerseits über ein Schrägkugellager (34) an die erste Toroidscheibe (25) abstützt und der sich andererseits über die Spreizkupplung (20) an der Nabenhülse (9) abstützt.

**12.** Antriebsnabe nach einem der vorhergehenden Ansprüche,
**dadurch gekennzeichnet,** daß die Kupplungseinrichtung eine Freilaufkupplung (23) ist, über die die zweite Toroidscheibe (27) mit dem Antreiber (13) in Antriebsdrehrichtung drehfest verbunden ist.

**13.** Antriebsnabe nach Anspruch 12,
**dadurch gekennzeichnet,** daß die Freilaufkupplung (23) als Klinkenfreilaufkupplung ausgebildet ist.

**14.** Antriebsnabe nach einem der vorhergehenden Ansprüche,
**gekennzeichnet durch** wenigstens eine Vorspannfeder, die sich einerseits an der Nabenhülse (9) und andererseits an einer der beiden Toroidscheiben (25,27) abstützt, zur Vorspannung der beiden Toroidscheiben (25,27) in Richtung aufeinander zu.

**15.** Antriebsnabe nach Anspruch 14,
**dadurch gekennzeichnet,** daß die Vorspannfeder als Druckfeder (65) ausgebildet ist, die einerseits an die Innenseite der zweiten Nabenstirnwand (57) angreift und die sich andererseits an einem Außenring (57) des zwischen die zweite Nabenstirnwand (57) und die zweite Toroidscheibe (27) eingesetzten Schrägkugellagers (31) abstützt.

**16.** Antriebsnabe nach einem der vorhergehenden Ansprüche,
**dadurch gekennzeichnet,** daß die Nabenhülse (9) das Reibradgetriebe (17) gehäuseartig umfaßt und aus wenigstens zwei miteinander verschraubbaren Teilen (9,57) besteht.

**17.** Antriebsnabe nach einem der vorhergehenden Ansprüche,
**dadurch gekennzeichnet,** daß die erste Toroidscheibe (25) mit einem Reaktionsmoment-Hebel (1a) versehen ist, der mit einem Fahrzeugrahmen zur Aufnahme von Reaktionsmomenten verbindbar ist.

**18.** Antriebsnabe nach einem der vorhergehenden Ansprüche,
**dadurch gekennzeichnet,** daß die Steuereinrichtung (47,51,53) ein innerhalb der Nabenachse (1) geführtes Gestänge (53) und ein gelenkig mit den Achszapfen (37) der Reibräder (35) gekuppeltes, auf der Nabenachse (1) geführtes und längs der Nabenachse (1) mittels des Gestänges (53) verschiebbares Schaltelement umfaßt.

**19.** Antriebsnabe nach Anspruch 18,
**dadurch gekennzeichnet,** daß das Schaltelement einen Lageraußenring (47), einen Lagerinnenring (51) sowie ein den Lageraußenring mit dem Lagerinnenring verbindendes Kugellager (49) umfaßt.

**20.** Antriebsnabe nach einem der vorhergehenden Ansprüche,
**dadurch gekennzeichnet,** daß die Reibräder (35) in Schwenkrahmen (39) gelagert sind, die ihrerseits wieder im Reibradträger (43) mittels Lagerbolzen (42) um eine jeweilige Schwenkachse 41 gelagert sind.

**21.** Antriebsnabe nach Anspruch 20,
**dadurch gekennzeichnet,** daß die Schwenkrahmen (39) mit Hebeln (39c) versehen sind, die an den Lageraußenring (47) jeweils in einem Angriffspunkt angreifen, dessen Abstand (1) von der Schwenkachse (102) der Schwenkrahmen (39) im wesentlichen dem Abstand zwischen der Achse (100) der Nabe und der Schwenkachse (41) der Schwenkrahmen (39) entspricht.

## Claims

**1.** A drive hub for a vehicle, particularly a bicycle, comprising:
 - a hub axle (1) which determines an axis (4) of the hub,
 - a hub shell (9) which equiaxially encloses and is rotatable in relation to the hub axle (1),
 - a driver (13) mounted to rotate relative to the hub shell (9) and the hub axle (1),
 - a friction gear (17) disposed inside the hub shell (9) and which comprises two axially oppositely disposed toroidal discs (25, 27) and, distributed in the peripheral direction of the toroidal discs (26, 27) a plurality of friction wheels (35) which connect the toroidal discs (26, 27) to one another in frictional fashion and which is disposed in the force path between the driver (13) and the hub shell (9), the friction wheels (35) being rotatably mounted on king pins (37), the king pins (37) being in turn pivotally mounted on a friction wheel carrier (43) via pivot spindles (41) extending in the peripheral direction of the toroidal discs (25, 27),
 - at least one coupling arrangement (23) which, when the hub is being driven by the driver (13), closes the power path between driver (13) and hub shell (9) and opens the power path when the driver (13) is not driving and

- a control arrangement (47, 51, 53) which can be actuated from outside and which pivots the friction wheels (35) jointly about the pivot axes (41) for infinitely variable adjustment of the transmission ratio of the friction gear (17),

whereby a first disc (25) of the two toroidal discs (25, 27) which is farther removed from the driver (13) than the second (27) of the two toroidal discs is rotationally rigidly disposed on the hub axle (1),

characterised in that

the second toroidal disc (27) is rotationally rigidly coupled to the driver (13) at least in the driving direction of rotation and in that

the friction wheel carrier (43) is rotationally rigidly coupled to the hub shell (9) at least in the driving direction of rotation.

2. A drive hub according to Claim 1, characterised in that the toroidal surface (25a) of the first toroidal disc (25) extends farther in the direction of the axis (100) than the toroidal surface (27a) of the second toroidal disc (27) and in that the toroidal surface (27a) of the second toroidal disc (27) extends farther away from the axis (100) than the toroidal surface (25a) of the first toroidal disc (25).

3. A drive hub according to Claim 1 or 2, characterised by a coupling sleeve (43a) which extends in an annular space (104) between the first toroidal disc (25) and the hub shell (9) and which connects the friction wheel carrier (43) to the hub shell (9) via a coupling.

4. A drive hub according to Claim 3, characterised in that the coupling is an expanding coupling (20).

5. A drive hub according to one of the preceding Claims, characterised in that the hub shell (9) is constructed to accommodate the inner axial forces of the friction gear (17).

6. A drive hub according to Claim 5, characterised in that

- the hub shell (9) has a hub end wall (56, 57) at each of its two axial ends and in that
- the expanding coupling (20) is in the direction parallel with the axis (100) of the hub, biased on one side against the first toroidal disc (25) and on the other against the inside wall of one (56) of the two hub end walls (56, 57), and in that

- there is on the other hub end wall (57) a pivot bearing which, in the direction parallel with the axis (100) of the hub, braced on one side against the second toroidal disc (27) and on the other against the inside of the other hub end wall (57) and in that
- at least one (27) of the two toroidal discs (25, 27) is mounted for movement on the hub in a direction parallel with the axis (100) of the hub.

7. A drive hub according to Claim 6, characterised in that

- the first toroidal disc (25) is rigidly disposed on the hub axle (1) and in that
- the second toroidal disc (27) is disposed for movement on the hub axle (1) and in that
- the hub shell (9) is mounted for movement in a direction parallel with the axis (100) of the hub.

8. A drive hub according to Claim 6 or 7, characterised in that the pivot bearing is an angled ball-bearing (31).

9. A drive hub according to one of Claims 6 to 8, characterised in that at least one of the two hub end walls (56, 57) is braced via a radial ball-bearing (3, 5) with movement clearance in a direction parallel with the axis (100) of the hub.

10. A drive hub according to Claim 9, characterised in that the radial ball-bearing (3, 5) is constructed with a ball race of large osculation radius or with a cylindrical ball race.

11. A drive hub according to one of Claims 4 to 10, characterised in that the coupling sleeve (43a) is provided with a coupling ring (33) braced on one side against the first toroidal disc (25) via an angled ball-bearing (34) while its other side is braced on the hub shell (9) via the expanding coupling (20).

12. A drive hub according to one of the preceding Claims, characterised in that the coupling arrangement is a freewheel coupling by which the second toroidal disc (27) is rotationally rigidly connected to the driver (13) in the drive direction of rotation.

13. A drive hub according to Claim 12, characterised in that freewheel coupling (23) is constructed as a ratchet freewheel coupling.

**14.** A drive hub according to one of the preceding Claims, characterised by at least one pre-tensioning spring biased at one end on the hub shell (9) and at the other on one of the two toroidal discs (25, 27) for pre-tensioning the two toroidal discs (25, 27) in the direction of each other.

**15.** A drive hub according to Claim 14, characterised in that the pre-tensioning spring is constructed as a thrust spring (65) one end of which engages the inside of the second hub end wall (57) while its other end is biased on an outer ring (57) of the inclined ball-bearing (31) inserted between the second hub end wall (57) and the second toroidal disc (27).

**16.** A drive hub according to one of the preceding Claims, characterised in that the hub shell (9) encloses the friction gear (17) like a housing and consists of at least two parts (9, 57) which can be bolted to each other.

**17.** A drive hub according to one of the preceding Claims, characterised in that the first toroidal disc (25) is provided with a reaction moments lever (1a) adapted to be connected to a vehicle frame to accommodate reaction moments.

**18.** A drive hub according to one of the preceding Claims, characterised in that the control means (47, 51, 53) comprises a linkage (53) guided within the hub axle (1) and a shifting element coupled articulatingly to the king pins (37) of the friction wheels (35), guided on the hub axle (1) and adapted for displacement along the hub axle (1) by means of the linkage (53).

**19.** A drive hub according to Claim 18, characterised in that the shifting element comprises an outer bearing ring (47), an inner bearing ring (51) and a ball-bearing (49) which connects the outer bearing ring to the inner bearing ring.

**20.** A drive hub according to one of the preceding Claims, characterised in that the friction wheels (35) are mounted in pivot frames (39) which are in turn again mounted in the friction wheel carrier (43) by means of bearing pins (42) so that they can pivot about a respective pivot axis (41).

**21.** A drive hub according to Claim 20, characterised in that the pivot frames (39) are provided with levers (39c) which engage the outer bearing ring (47) at a point of application of which the distance (1) from the pivot axis (102) of the pivot frames (39) corresponds substantially to the distance between the axis (100) of the hub and the pivot axis (41) of the pivot frames (39).

**Revendications**

**1.** Moyeu d'entraînement pour un véhicule, en particulier une bicyclette, comprenant :
- un axe de moyeu (1), fixant un axe (100) du moyeu,
- une douille de moyeu (9), coaxiale par rapport à l'axe de moyeu (1) et l'entourant en pouvant tourner autour de lui,
- un élément entraîneur (13), monté à rotation par rapport à la douille de moyeu (9) et à l'axe de moyeu (1),
- une transmission à roue de friction (17), disposée à l'intérieur de la douille de moyeu (9), présentant deux disques toroïdaux (25, 27), axialement en regard l'un par rapport à l'autre, et plusieurs roues de friction (35), reliant ensemble avec friction les disques toroïdaux (25, 27), et disposées dans la chaîne cinématique entre élément entraîneur (13) et douille de moyeu (9), les roues de friction (35) étant montées à rotation sur des tourillons d'axe (37) et les tourillons d'axe (37), pour leur part, étant montés sur un support de roue de friction (43), de façon à pouvoir pivoter, par l'intermédiaire d'axes de pivotement (41) s'étendant dans la direction périphérique des disques toroïdaux (25, 27),
- au moins un dispositif d'accouplement (23) qui, en cas d'entraînement du moyeu par l'élément entraîneur (13), ferme la chaîne cinématique entre élément entraîneur (13) et douille de moyeu (9), et, en cas de non entraînement par l'élément entraîneur (13), ouvre la chaîne cinématique,
- un dispositif de commande (47, 51, 53), pouvant être commandé depuis l'extérieur, pour régler de façon continue le rapport de transmission de la transmission à roue à friction (17), par pivotement conjoint des roues à friction (35) autour des axes de pivotement (41),
un premier (25) des deux disques toroïdaux (25, 27), celui qui est le plus distant de l'élément entraîneur (13) que l'est le deuxième (24) des deux disques toroïdaux, étant assujetti en rotation sur l'axe de moyeu (1),
caractérisé en ce que
- le deuxième disque toroïdal (24) avec l'élément entraîneur (13) est couplé en rotation, au moins dans le sens de rotation de l'entraînement, et le support de roue de friction (43) est couplé en rotation à la douille de moyeu (9), au moins dans le sens de rotation de l'entraînement.

2. Moyeu d'entraînement selon la revendication 1,
caractérisé en ce que la surface toroïdale (25a) du premier disque toroïdal (25) s'étend plus loin, en direction de l'axe (100), que s'étend la surface toroïdale (27a) du deuxième disque toroïdal (27), et en ce que la surface toroïdale (27a) du deuxième disque toroïdal (27) s'écarte plus de l'axe (100) que la surface toroïdale (25a) du premier disque toroïdal (25)

3. Moyeu d'entraînement selon la revendication 1 ou 2,
caractérisé par un boîtier d'accouplement (43a), s'étendant dans un espace annulaire (104) entre le premier disque toroïdal (25) et la douille de moyeu (9) et reliant le support de roue de friction (43) à la douille de moyeu (9), par l'intermédiaire d'un embrayage.

4. Moyeu d'entraînement selon la revendication 3,
caractérisé en ce que l'embrayage est un embrayage à écartement (20).

5. Moyeu d'entraînement selon l'une des revendications précédentes, caractérisé en ce que la douille de moyeu (9) est réalisée pour supporter les efforts axiaux internes de la transmission à roue à friction (17).

6. Moyeu d'entraînement selon la revendication 5,
caractérisé en ce que
   - la douille de moyeu (9) est pourvue à chacune de ses deux extrémités axiales d'une paroi frontale de moyeu (56, 57),
   - l'embrayage à écartement (20) prend appui, d'une part, sur le premier disque toroïdal (25), dans la direction parallèle à l'axe (100) du moyeu, et, d'autre part, sur la face intérieure de l'une (56) des deux parois frontales de moyeu (56, 57),
   - en ce que sur l'autre paroi frontale de moyeu (57) est prévu un palier de rotation, prenant appui sur le deuxième disque toroïdal (27), dans la direction parallèle à l'axe (100) du moyeu, et, d'autre part, sur la face intérieure de l'autre paroi frontale de moyeu (57), et

   - en ce qu'au moins l'un (27) des deux disques toroïdaux (25, 27) est monté mobile sur le moyeu, dans une direction parallèle à l'axe (100) du moyeu.

7. Moyeu d'entraînement selon la revendication 6,
caractérisé
   - en ce que le premier disque toroïdal (25) est disposé fixe sur l'axe de moyeu (1),
   - en ce que le deuxième disque toroïdal (27) est disposé mobile sur l'axe de moyeu (1)
   - en ce que la douille de moyeu (9) est montée mobile sur l'axe de moyeu (1), dans la direction parallèle à l'axe (100) du moyeu.

8. Moyeu d'entraînement selon la revendication 6 ou 7,
caractérisé en ce que le palier de rotation est un roulement à billes à contact oblique (31).

9. Moyeu d'entraînement selon l'une des revendications 6 à 8, caractérisé en ce qu'au moins l'une des deux parois frontales de moyeu (56, 57) prend appui par l'intermédiaire d'un roulement à billes radial (3,5) présentant un jeu de déplacement en direction parallèle à l'axe (10) du moyeu.

10. Moyeu d'entraînement selon la revendication 9,
caractérisé en ce que le roulement à billes radial (3, 5) est réalisé avec une piste de roulement de billes dont le rayon osculateur est grand, ou avec une piste de roulement de billes cylindrique.

11. Moyeu d'entraînement selon l'une des revendications 4 à 10, caractérisé en ce que la douille d'accouplement (43a) est pourvue d'une bague d'accouplement (33), prenant appui, d'une part, par un roulement à billes à contact oblique (34), sur le premier disque toroïdal (25), et d'autre part, par l'embrayage à friction (20), sur la douille de moyeu (9).

12. Moyeu d'entraînement selon l'une des revendications précédentes, caractérisé en ce que le dispositif d'accouplement est un embrayage à roue libre (23), par l'intermédiaire duquel le deuxième disque toroïdal (27) est relié en rotation à l'élément entraîneur (13).

13. Moyeu d'entraînement selon la revendication 12,
caractérisé en ce que l'embrayage à roue libre (23) est réalisé sous forme d'embrayage à roue libre à cliquet.

14. Moyeu d'entraînement selon l'une des revendications précédentes, caractérisé par au moins un ressort de précontrainte, prenant appui, d'une part, sur la douille de moyeu (9), et, d'autre part, sur l'un des deux disques toroïdaux (25, 27), en vue d'assurer la précontrainte des deux disques toroïdaux (25, 27) en direction l'un de l'autre.

15. Moyeu d'entraînement selon la revendications 14,
caractérisé en ce que le ressort de précontrainte est réalisé sous forme de ressort de pression (65), agissant d'une part sur la face intérieure de la deuxième paroi frontale de moyeu (57) et prenant appui, d'autre part, sur une bague extérieure (57) du roulement à billes à contact oblique (31) monté entre la deuxième paroi frontale de moyeu (57) et le deuxième disque toroïdal (27).

16. Moyeu d'entraînement selon l'une des revendications précédentes, caractérisé en ce que la douille de moyeu (9) entoure à la façon d'un carter la transmission à roue à friction (17) et est composée d'au moins deux parties (9, 57) pouvant être vissées ensemble.

17. Moyeu d'entraînement selon l'une des revendications précédentes, caractérisé en ce que le premier disque toroïdal (25) est pourvu d'un levier à couple de réaction (1a), pouvant être relié à un châssis de véhicule, pour supporter les couples de réaction.

18. Moyeu d'entraînement selon l'une des revendications précédentes, caractérisé en ce que le dispositif de commande (47, 51, 53) comprend une tringlerie (53), guidée à l'intérieur de l'axe de moyeu (1) et un élément de manoeuvre, couplé de façon articulé au tourillon d'axe (37) des roues à friction (35), guidé sur l'axe de moyeu (1) et déplaçable le long de l'axe de moyeu (1), au moyen de la tringlerie (53).

19. Moyeu d'entraînement selon la revendication 18,
caractérisé en ce que l'élément de manoeuvre comprend une bague extérieure de palier (47), une bague intérieure de palier (51), ainsi qu'un roulement à bille (49), reliant la bague extérieure de palier à la bague intérieure de palier.

20. Moyeu d'entraînement selon l'une des revendications précédentes, caractérisé en ce que les roues à friction (35) sont montées dans des cadres pivotants (39), tourillonnant de leur côté dans le support de roue à friction (43), au moyen de boulons de tourillonnement (42), autour d'un axe de pivotement (41) respectif.

21. Moyeu d'entraînement selon la revendication 20,
caractérisé en ce que les cadres pivotants (39) sont pourvus de leviers (39c), agissant sur la bague extérieure de palier (47), chaque fois en un point d'action dont la distance (1) par rapport à l'axe de pivotement (102) du cadre pivotant (39) correspond sensiblement à la distance entre l'axe (100) du moyeu et l'axe de pivotement (41) du cadre pivotant (39).

# Fig.1

# Fig.2

104
43a
43
9
27
25
102
37
39b
27a
41
d₂
Bereich
Bereich
39a
35
47
51
55
25a
1
1
d₁
53
39c
58
100
53
Schaltbereich
Bahnkurve von 45a auf 45

# Fig.3

39b
102
35
41
39c
39a
l
45a

# Fig. 4